# EUROPEAN PATENT APPLICATION

(11) **EP 2 246 711 A2**
(43) Date of publication of application: **03.11.2010**
(21) Application number: 09169667.4
(22) Date of filing: 07.09.2009
(51) Int. Cl.: G01T 1/20

(54) **Intelligent Sensor Platform**

(30) Priority: 17.04.2009 US 170340 P; 16.07.2009 US 226185 P; 04.09.2009 US 554716
(71) Applicant: Canberra Industries, Inc., Meriden, CT 06450 (US)
(72) Inventor: Morichi, Massimo, Meriden, CT 06450 (US); Keters, Marijke, Meriden, CT 06450 (US); Bronson, Frazier, Meriden, CT 06450 (US); Zakrzewski, Robert A, Meriden, CT 06450 (US); Evrard, Olivier, Meriden, CT 06450 (US); Russ, William, Meriden, CT 06450 (US)
(74) Representative: Watterson, Peer Marten John

(57) **Abstract**

A radiation detection apparatus that utilizes a radiation sensor device that includes a scintillator device that is optically coupled to a plurality of silicon drift detector devices. Each silicon drift detector device segment includes an output anode that supplies the segment output to dedicated sensor processing circuitry. With each anode having dedicated processing circuitry, each output can be processed simultaneously. Also provided is a spectroscopic analysis device that is coupled with the sensor processing circuitry for computing spectral data associated with the radiation detection event. The spectroscopic analysis device accurately characterizes the detected radionuclide and prepares the results for display before the user. Networking capabilities also allow multiples of such apparatuses to communicate in an intelligent grid, providing even greater radionuclide characterization capabilities.

## Description

### BACKGROUND OF EMBODIMENTS OF THE INVENTION

### 1. Field of Embodiments of the Invention

Embodiments of the present invention relate to intelligent radiation detection devices.

### 2. Description of Related Art

Current handheld radiation detection devices are severely limited in their ability to detect and identify radionuclides. Such handheld units merely provide a count indication that informs an operator when radioactivity is present, but do not adequately identify the radionuclide of interest. Further, current detection devices rely heavily on photomultiplier technology that tends to be large, slow, and rather sensitive to rough handling and environmental conditions. Use of photomultiplier technology also requires substantial amounts of power, reducing battery life or increasing equipment size to compensate by adding additional battery capacity.

### BRIEF SUMMARY OF EMBODIMENTS OF THE INVENTION

Certain embodiments of the present invention provide a radiation detection apparatus that utilizes a radiation sensor device that includes a scintillator that is optically coupled to one or a plurality of silicon drift detector devices. Each silicon drift detector device has one or more segments. Each segment includes an output anode that supplies the segment output to sensor processing circuitry. High performance configurations may utilize dedicated sensor processing circuitry for simultaneous processing of each output anode. Lower performance configurations may utilize a single processing circuit for multiple anodes. Also provided is a spectroscopic analysis device that is coupled with the sensor processing circuitry for computing spectral data associated with the radiation detection event. The spectroscopic analysis device accurately characterizes the detected radionuclide and prepares the results for display before the user. Networking capabilities also allow multiples of such apparatuses to communicate in an intelligent grid, providing even greater radionuclide characterization capabilities.

These and other improvements will become apparent when the following detailed disclosure is read in light of the supplied drawings. This summary is not intended to limit the scope of the invention to any particular described embodiment or feature. It is merely intended to briefly describe some of the key features to allow a reader to quickly ascertain the subject matter of this disclosure. The scope of the invention is defined solely by the claims when read in light of the detailed disclosure.

### BRIEF DESCRIPTION OF THE SEVERAL VIEWS OF THE DRAWING(S)

Example embodiments of the present invention will be more fully understood by reference to the following detailed description when read in conjunction with the accompanying drawings, wherein:
**FIG. 1** is a simplified cross-sectional view of a silicon drift detector;
**FIG. 2** is a simplified cross-sectional view of the silicon drift detector with an adjoining scintillator;
**FIG. 3A** is a simplified cross-sectional view of a scintillator optically coupled with a segmented silicon drift detector (SSDD) device and SSDD output anode summation circuitry;
**FIG. 3B** is a cross-sectional view of the SSDD device;
**FIG. 4** is a schematic diagram of the basic anode output readout circuitry;
**FIG. 5** is a block diagram depicting the functional sections of an embodiment of the present invention;
**FIG. 6** is a logic flow diagram describing application-driven embedded spectral analysis;
**FIG. 7** is a depiction of an embodiment of the intelligent sensor platform in a handheld form factor; and
**FIG. 8** is a depiction of some of the areas in which embodiments of the invention may be utilized.

The above figures are provided for the purpose of illustration and description only, and are not intended to define the limits of the disclosed invention. Use of the same reference number in multiple figures is intended to designate the same or similar parts. Furthermore, when the terms "top," "bottom," "first," "second," "upper," "lower," "height," "width," "length," "end," "side," "horizontal," "vertical," and similar terms are used herein, it should be understood that these terms have reference only to the structure shown in the drawing and are utilized only to facilitate describing the particular embodiment. The extension of the figures with respect to number, position, relationship, and dimensions of the parts to form the preferred embodiment will be explained or will be within the ordinary skill of the art after the following teachings of the present invention have been read and understood.

### DETAILED DESCRIPTION OF EXAMPLE EMBODIMENTS OF THE INVENTION

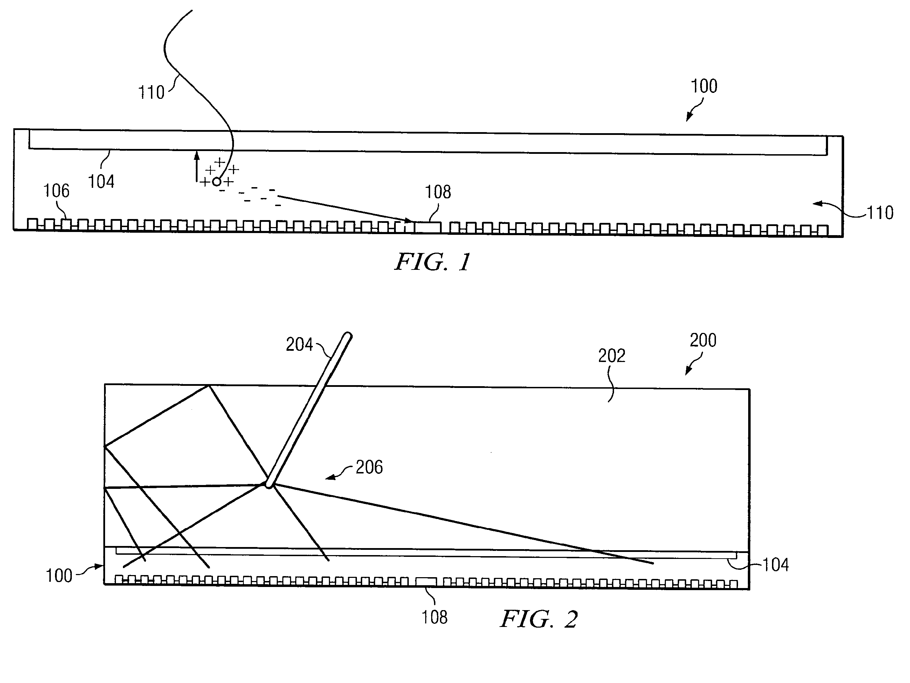

FIG. 1 depicts a single silicon drift detector (SDD) device (100) as used in an embodiment of the present invention. Traditional SDD detector technology is utilized, wherein the collection of the charge in the SDD is realized on a single, small readout anode (108) using the lateral drift field within the detector. By utilizing such a small readout anode the resulting device has a very low capacitance (<1 pF), which improves the overall detector resolution even with large active areas (100 to 250 mm²). The lateral drift field is obtained by integrating a chain of implanted resistive dividers (106) within the silicon substrate (110). A photon from a radiation event (110) enters the active area of the SDD (110) through the device's active area or "window" (104).

By coupling a SDD (100) to a high-luminosity lanthanum bromide (LaBr) scintillator, a gamma spectrometer with resolutions below 3 % for the 662 KeV line of Cs137 can be obtained. FIG. 2 depicts such a combination (200). In this embodiment, the scintillator (202) is optically coupled to the SDD (100). An incident gamma (204) enters and interacts with the scintillator material (202) causing incident photons (206). These photons then travel through the SDD window (104), ultimately creating an output signal at the readout anode (108).

Although a LaBr scintillator is shown in the present embodiment, it is possible to utilize other scintillation materials instead. For example, sodium iodide (NaI), cesium iodide (CsI), strontium iodide (SrI), mercuric iodide (HgI) and the like may also be utilized.

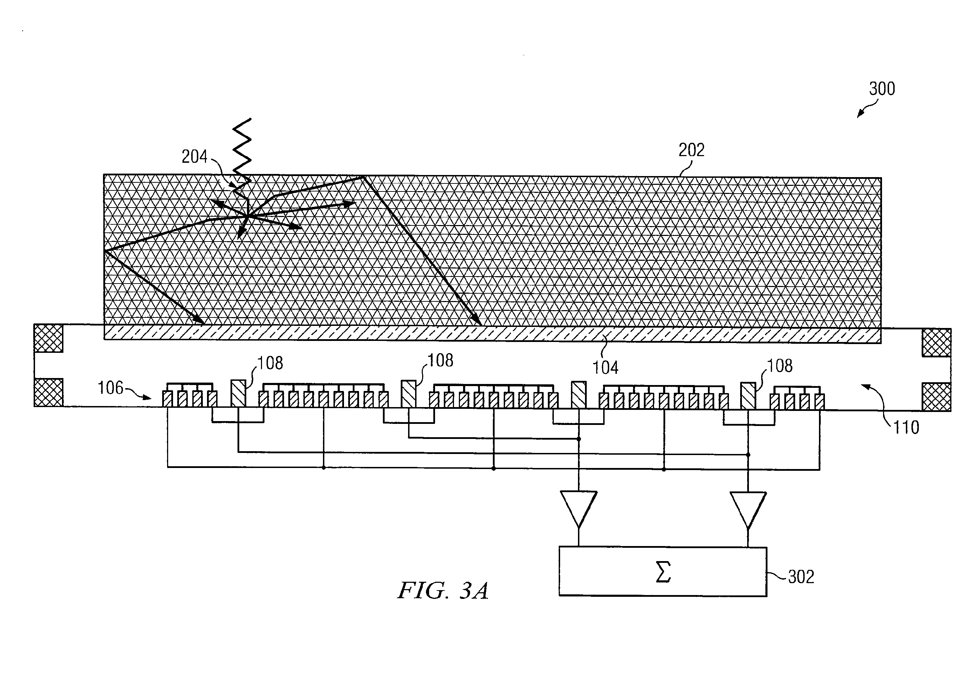

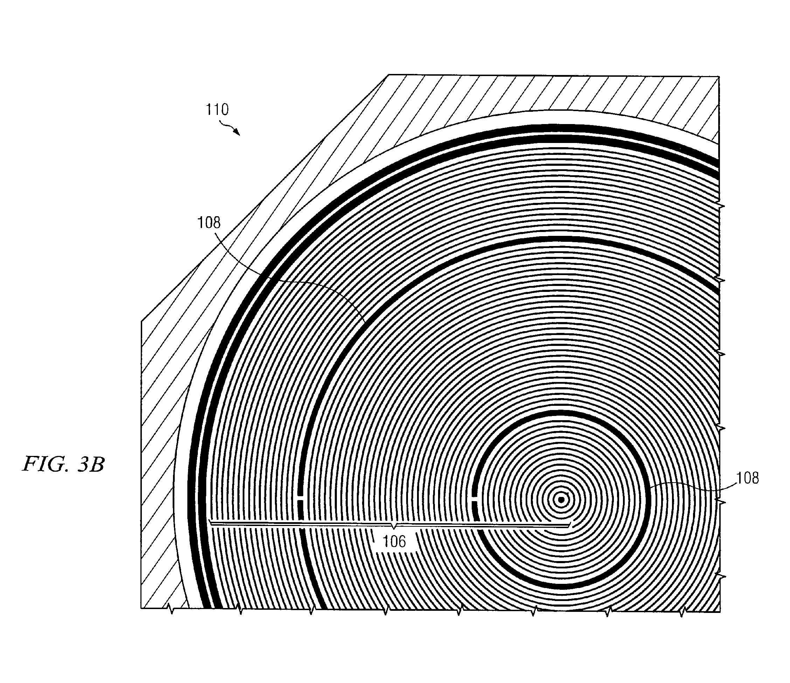

Given that the photons in a scintillator spread isotropically, and given that it takes an appreciable time for the electrons to drift their way to the collection anode, the size of the SDD must be limited to ensure good energy resolution with short collection times. In the present embodiment, the area of each collection anode of the SDD device (100) is limited to less than 250 mm² to achieve this balance. Still, a large area detector (i.e., 5 to 50 cm²) may be achieved by adding more anode segments (with a variation of anode geometry such as point, linear, circular, or other) on a single device (i.e., a SSDD), or by combining multiple multi-segment SDD devices. Silicon photolithography techniques enable batch production of large silicon detectors subdivided into these different segments. FIG. 3 depicts an embodiment of such a combination (300).

FIG. 3A depicts a simplified detail of an embodiment of the radiation sensor device of the present invention. As depicted, two SDD segments (100) are combined and optically coupled (104) to the scintillator device (202). Each SDD segment features its own output anode (108) for extraction of the electrical output signal. Although only two SDD segments (100) are depicted, one skilled in the art will appreciate that a lesser or greater number of segments may be combined to achieve a segmented silicon drift detector (SSDD) of different size or geometry.

As shown, an incident gamma (204) interacts with the scintillator (202) and causes photons to spread isotropically. In this example, the scintillation light is detected by the leftmost two SDD segments of the SSDD. An electrical signal is generated by these two segments with the outputs (108) supplying the signal to summation circuitry (302) for further processing.

FIG. 3B depicts a cross-sectional diagram of the present embodiment of the SSDD device (101). As shown, the steering electrodes (106) comprise concentric rings around the output anodes (108). Although a circular SSDD configuration is depicted, other shapes may be utilized and are within the scope of the claims.

Because the scintillator light spreads isotropically, all segment output anodes must be read simultaneously to maintain correlation with the originating scintillation event. By reading the segments simultaneously, it is possible to accurately obtain an XY position for the detected source. It is also possible for the system to add, through digital or analog means, the partial energies obtained by simultaneously reading the segments for energy totalization purposes.

The partial energies collected by every segment anodes can be summed by either analog or digital means to determine the total energy collected by the sensor after the detection of one event. The partial energies arising from each segment are linearly correlated with pulse or step heights coming out of each ASIC preamplifier-filter unit coupled to each drift segment.

In an analog summing embodiment, simple analog adder circuits may be utilized. The summed signal may then be sent to a single digitizing device, such as a multichannel analyzer (MCA), and then to a spectrum analysis device that is operable on the local processor. In a digital summing embodiment the analog signals coming from each segment output anode may be multiplexed to one single digitizing device, such as an MCA, or sent in parallel to dedicated digitizing devices. If dedicated digitizing devices are utilized, the outputs of these digitizing devices may be multiplexed to the spectrum analysis device for final processing.

Digitally summing the partial energies of several outputs collected in a defined time frame (called time stamped addition) reduces the low energy background signal and provides a better estimation of the integrals of peaks occurring at low energies than in the case of a simple analog addition of partial energies.

By nature, high energy gamma rays cause light scintillation that reaches all detector segments simultaneously. Thus the total energy of a gamma event can be obtained by digital addition of the partial energies given by every event that has been detected within a defined time interval. Thus, true gamma events generate coincident signals on every segment. By nature, noise peaks are random. Thus the detection of noise events on several segments in a limited time interval (under 1 µsec to 4 µsec) is statistically unlikely. The probability that noise events are detected simultaneously on several pixels is quite small. Thus, time stamped addition of simultaneous events occurring on all the segments of the SSDD are nearly always correlated with true gamma events, thus reducing the low energy background.

In another embodiment the SSDD is utilized to extend the low energy range of the detector. This is accomplished by exposing the side comprising the "anode" (108) and the resistive dividers (106) to the irradiation of gamma and X rays, placing the scintillator material on the non-irradiated side (or back side) of the detector. In doing so, discrimination between low energy X-rays or alpha and beta rays that are directly absorbed in the semiconductor material and gamma rays scintillated in the scintillator is possible.

An X-ray detected in the semiconductor will be absorbed in one single segment and will not be detected in other segments, while a gamma ray causing scintillation will generate events in all segments. Coincident events detected in several segment channels in the time stamped files will be associated with a high energy gamma event while events detected on a single segment or channel will be associated with a low energy X ray event (under 60 keV) or an alpha or beta event. Accordingly, when analyzing time stamped digitized information for all the segments of the detector and differentiating correlated events and non correlated events, it is possible to differentiate scintillated events from direct X-ray, alpha or beta ray absorption. This extends the low energy range of the sensor device.

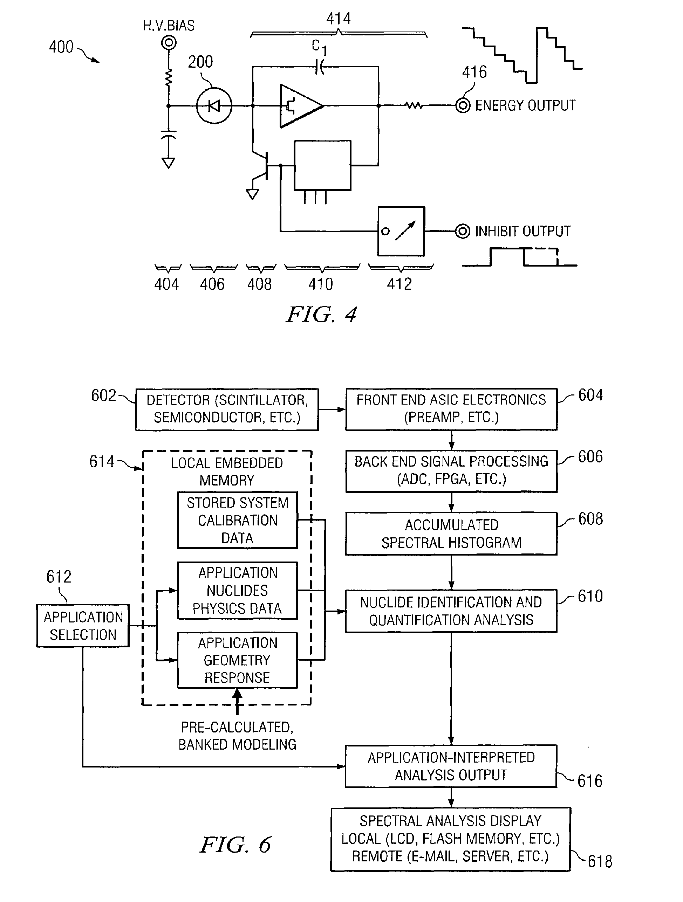

A portion of the SSDD sensor processing circuitry of the present embodiment is depicted in FIG. 4. This figure shows a basic schematic of the input portion of the basic anode output readout circuitry. The circuit shown is what can be utilized per anode, or group of anodes. For best performance, one such readout circuit must be attached to each SDD segment anode (i.e., one "channel"). Therefore, for the five segments depicted in FIG. 3, five such circuits (400) must be utilized (five channels).

In the schematic, it is shown that the SDD (200, 406) connects to a voltage biasing network (404) and to an integrator circuit (414). To minimize noise and improve response efficiency, it is important that the transistor reset preamplifier (400) be connected as close to the associated SDD segment as possible. Still, with proper signal conditioning and shielding, the circuit may be placed a reasonable distance from the anode. The integrator circuit (414) is further controlled by a comparator (410) and a switch (408). The switch (408) is controlled by a monostable device (412) that periodically resets the amplifier output (416). The output of the readout circuit (416) is then fed to additional amplifier stages and signal processing stages. While a transistor reset preamplifier circuit is utilized in the present embodiment, it is important to note that other types of preamplifiers may also be utilized and are within the scope as claimed.

The sensor processing circuitry of the present embodiment is designed to utilize numerous other detectors as well, such as the germanium and silicon variety. Operational characteristics of the available detectors include:

| ***Detector*** | ***Detector Capacitance*** ***(pF)*** | ***JFET*** ***C_{gs}*** ***(pF)*** | ***JFET*** ***gₘ*** ***(mS)*** | ***Preamp Noise*** **(*eᵣₘₛ*)** | ***Preamp Noise Slope*** ***(***□***ᵣₘₛ*/*pF)*** | ***System Noise*** |
|---|---|---|---|---|---|---|
| Ge (Std) | 15 to 32 | 8 | 45 | 90.0 to 171 | 4.8 | |
| | | 25 | 15 | | | |
| Ge (Well) | 30 to 39 | 8 | 45 | 140 to 203 | 7.0 | |
| | | 25 | 15 | | | |
| Ge (XtRa, REGe) | 16 to 29 | 8 | 45 | 92.8 to 156 | 4.8 | |
| | | 25 | 15 | | | |
| Ge (BEGe) | 2 to 3 | 25 | 15 | 47.1 to 69.3 | 1.8 | |
| | | 4 | 6 | | | |
| | | 0.7 | 8 | | | |
| | | 4 | 40 | | | |
| | | 8 | 45 | | | |
| Ge (LEGe) | 0.3 to 3 | 4 | 6 | 17.1 to 55.0 | 1.4 | |
| | | 0.7 | 8 | | | |
| | | 4 | 40 | | | |
| | | 0.9 | 11 | | | |
| Ge (Ultra LEGe) | 0.2 | 0.9 | 11 | 10.7 to 14.3 | | |
| PLESi | 0.4 | 0.7 | 8 | 7.18 | 2.6 | |
| | | 4 | 40 | | | |
| | | 0.9 | 11 | | | |
| Si(Li) | 0.5 to 2 | 0.9 | 11 | 7.18 to 11.1 | 2.6 | |
| SDD* | | | | | | < 800eV |
| | | 0.45 | 2 | | | (T=20C) |
| | 4 to 12 | 0.9 | 7 | | | < 140eV (T= |
| | | 1.8 | 18 | | | 30C) |
| | | | | | | @Fe55 |
| SDD*-Scintillator | | 0.45 | 2 | | | |
| | 4 to 12 | 0.9 | 7 | | | < 20keV @Cs137 |
| | | 1.8 | 18 | | | |
| PMT-Scintillator | 500 | NA | NA | 9375 | 6.25 | < 50keV @Cs137 |

For the signal processing stage, digital signal processor (DSP) devices provide the most stable and flexible signal processing means. However, the analog and DSP circuits are traditionally made up of a large number of discrete components mounted on a printed circuit board, making the resulting device rather large. To obtain compactness and good spectroscopy performance, the present embodiment utilizes an application specific integrated circuit (ASIC). ASIC technology provides the ability to process many channels in a small device with relatively low power consumption. Still, although ASIC technology is utilized in the present embodiment, other such technologies to process the signals may be utilized.

Following the signal processing stage, the radiation detection apparatus employs a high-quality spectroscopic analysis device. Such spectroscopic analysis device may utilize a processing device that is capable of executing program instructions, an ASIC, or a dedicated programmable logic device such as a field programmable gate array (FPGA) or complex programmable logic device (CPLD). In the present embodiment, an FPGA is employed (504) to perform the spectroscopic analysis using predefined algorithms (506) on the sensor outputs.

In the present embodiment, the spectrometer (504) is able to adjust the parameters of the analysis algorithm (506), including response calibrations and nuclide libraries, based on measured spectral data as well as explicit knowledge of the measurement conditions. By using a programmable device, it is possible to rapidly implement new and smarter algorithms that are able to adapt the analysis based on the implicit and explicit information available to render optimal results.

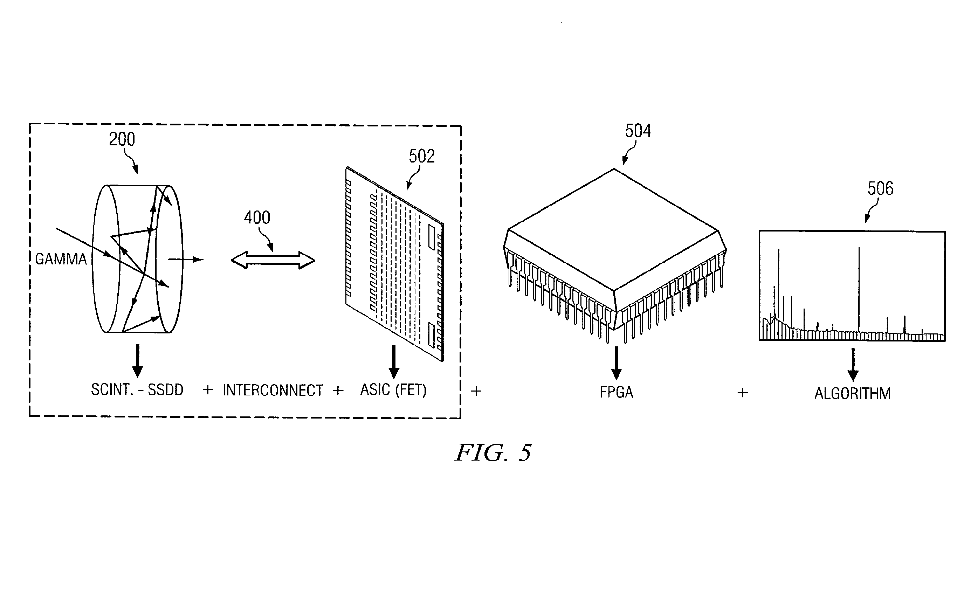

FIG. 5 depicts the entire system block diagram, wherein the sensor device (200) is followed by the sensor processing circuitry (e.g., the circuitry connecting the anodes to the preamplifier (400) and ASIC (502) or other similar configuration containing preamplifiers), which is followed by the spectroscopic analysis device (504 and 506).

FIG. 6 depicts a logic flow diagram describing the spectral analysis steps performed by an embodiment of the present invention. Processing starts with a detected radiation event (602) that is conditioned by the analog preamplification (604) and subsequent digital processing circuitry (606). This sensor processing circuitry then determines the energy of each detected event (608). Given a set of acquired system events, a spectrum is generated as an energy-dependent histogram. The system has a set of stored calibrations, characterizing the system energy and peak shape responses based upon the selection of an application to be run on the device (612). The candidate nuclide physics data (intrinsic emission energies and probabilities) and specific geometry response information are input to the analysis based upon the application selected (614). The analysis determines the maximum likelihood match between the measured spectrum and the nuclide identity and activity as interpreted via the calibrations and other physics data (610). The nuclide analysis results are then interpreted based on the selected application (616) to yield the most appropriate output for display (618).

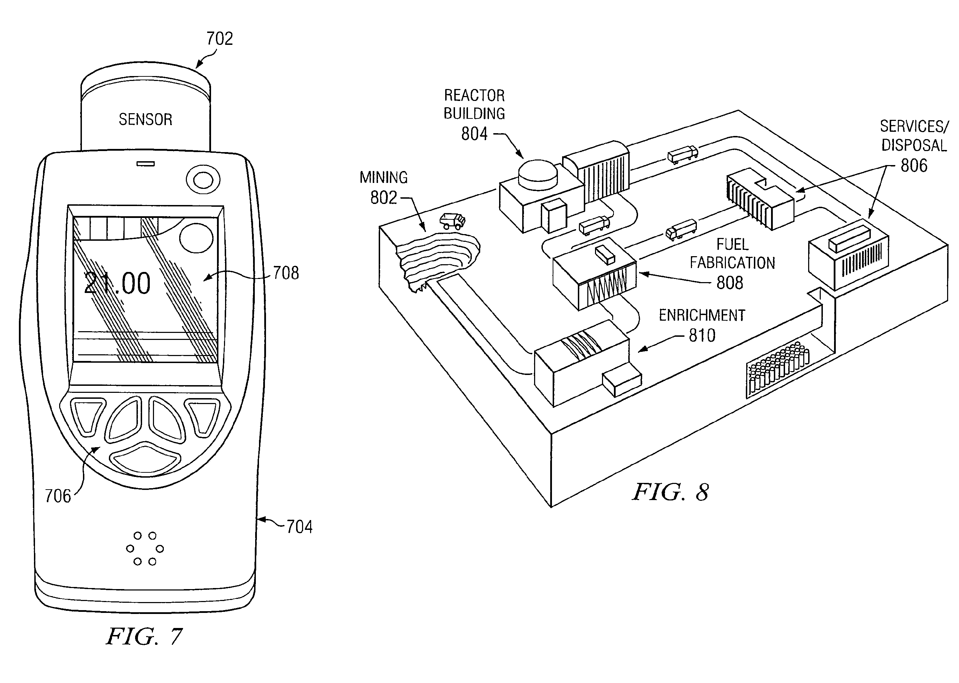

FIG. 7 depicts an end product that incorporates all aspects of an embodiment of the present invention. For example, the large SSDD sensor (702) is attached to the body of a handheld device (704) having a readily accessible control pad (706). A large readout (708) allows the operator to view and configure the device as well as to read the resulting spectroscopic analysis details. The present embodiment allows the implementation of specific algorithms, based on novel spectroscopy approaches with excellent NID (Nuclide Identification) performance that is compliant with ANSI standards. This embodiment also enables a high level of customization where different variables must be taken into account to reach good analysis results (radiation background, presence of overlaps of photoelectron peaks or multiplets, scattering, secondary induced reactions, temperature etc ...). Finally, the optional incorporation of a device interface offering networking capabilities enables distribution of this type of sensors in any location.

In another embodiment, the radiation detection apparatus of the present invention incorporates networking capabilities that allow for a distributed network of independent intelligent sensors communicating with one supervisory controller unit. The supervisory control unit may be a standalone device that controls the independent sensors, or it may be incorporated into one of the sensors. The network enables localization and tracing as a function of time next to the identification of the radiation. The combination of the very compact intelligent sensor easily deployable in any location and the multiplication option of the intelligent sensor to a distributed network introduce a new way of analyzing and monitoring radiation.

To achieve this networking capability, it is possible to incorporate common wired networking technologies such as Ethernet, JTAG, SCSI, FireWire, i.Link, USB, or the like, or it may incorporate wireless technologies such as Wireless PAN, Wireless LAN, Wireless MAN, Wi-Fi, WiMAX, GSM, PCS, Bluetooth, ZigBee, and the like. Use of TCP/IP also allows placement of groups of sensors at a remote location and monitoring of the devices over the Internet.

While the present embodiment primarily addresses use of a scintillator material for radiation detection, the same techniques also apply to other gamma and alpha spectroscopic detector materials, such as those consisting of germanium, silicon, CdTe, and CdZnTe. These semiconductor radiation detectors typically feature a single output anode, and convert a detected radiation event to an analog electrical signal at this output. In such an embodiment the output signal is supplied to the sensor processing circuitry and, subsequently, to the spectrum analysis device for final analysis.

FIG. 8 depicts some of the areas in which the detection device incorporating the present invention may be utilized. For example, the present embodiment and others are sufficiently flexible to allow use in mining operations (802) (i.e., area monitoring, exploration, down hole monitoring, material sorting, etc.); nuclear reactor facilities (804) (i.e., safeguards, area monitoring, spent fuel monitoring, pipe monitoring, burn up, RMS, etc.); nuclear fuel service and disposal facilities (806) (i.e., decontamination and decommissioning, area monitoring, dry fuel storage, etc.); nuclear fuel fabrication facilities (808) (i.e., area monitoring, on-line safeguards, hold up, pin fuel assembly, in-glove box, magazine counters, etc.); and fuel enrichment facilities (810) (i.e., area monitoring, cascade, online safeguards, etc.). The detector material (Ge, SDD, etc.) may be chosen depending upon the requirements for the area in which the device is to be used.

1 A radiation detection apparatus, the apparatus comprising: a radiation sensor device for detecting radiation events, the sensor device comprising: a scintillator device responsive to the radiation events; and one or more segmented silicon drift detector (SSDD) devices optically coupled to the scintillator device, wherein each SSDD device includes an output anode for each segment; and sensor processing circuitry coupled with each of the one or more silicon drift detector device output anodes, wherein each output can be processed simultaneously by the sensor processing circuitry.

2 The radiation detection apparatus of statement 1, the apparatus further comprising: a spectroscopic analysis device coupled with the sensor processing circuitry for computing spectral data associated with the radiation detection event.

3 The radiation detection apparatus of statement 1 wherein each SSDD device comprises a plurality of output anodes and one collective steering cathode for all anodes.

4 The radiation detection apparatus of statement 1 wherein the sensor processing circuitry comprises an embedded computer processing device capable of executing stored program instructions that allow identification of the radionuclide that triggered the radiation detection event.

5 The radiation detection apparatus of statement 1 wherein the sensor processing circuitry comprises an ASIC device coupled to the SSDD output anodes, and wherein the ASIC device can process each of the detector outputs simultaneously.

6 The radiation detection apparatus of statement 1 wherein the sensor processing circuitry comprises a multichannel analyzer device.

7 The radiation detection apparatus of statement 1 further comprising: a networking device through which the apparatus may communicate with other like apparatuses.

8 The radiation detection apparatus of statement 1 further comprising: a networking device through which the apparatus may communicate with a supervisory control unit to form a part of a distributed network of like apparatuses.

9 The radiation detection apparatus of statement 2, wherein the spectroscopic analysis device is capable of executing program instructions, the program steps comprising: accumulating the output signal from each of the SSDD devices; generating a spectral histogram based upon the accumulated output signals; analyzing the spectral histogram with respect to interpreted known radionuclide responses; and identifying a detected radionuclide based upon a statistical analysis of the likelihood of a match between the spectral histogram and the interpreted radionuclide response.

10 The radiation detection apparatus of statement 9 wherein the interpreted known radionuclide responses are based on the apparatus performance characteristics.

11 The radiation detection apparatus of statement 2, wherein the spectroscopic analysis device is capable of executing program instructions, the program steps comprising: accumulating the output signal from each of the SSDD devices; correlating the accumulated output signals with respect to the time that each output signal was obtained; and determining if the radiation detection event was detected by either all or less than all SSDD devices.

12 The radiation detection apparatus of statement 2, wherein the SSDD devices are responsive to the radiation events.

13 The radiation detection apparatus of statement 12, wherein the spectroscopic analysis device is capable of executing program instructions, the program steps comprising: accumulating the output signal from each of the SSDD devices; correlating the accumulated output signals with respect to the time that each output signal was obtained; and determining if the radiation detection event was detected by either one or more than one SSDD device.

14 A method for reducing the influence of low energy background radiation during radiation detection events in a scintillator-equipped radiation detection apparatus, the method steps comprising: optically coupling a plurality of segmented silicon drift detector (SSDD) devices to the scintillator material, wherein each SSDD device includes at least one output anode per segment; detecting radiation events within the scintillator material; accumulating the output signal from each of the output anodes; correlating the accumulated output signals with respect to the time that each output signal was obtained; and determining if the radiation detection event was detected by either all or less than all SSDD devices.

15 The method of statement 14, wherein each SSDD device comprises a plurality of output anodes and one collective steering cathode for all anodes.

16 A method for extending the low energy range of a scintillator-equipped radiation detection apparatus, the method steps comprising: optically coupling a plurality of segmented silicon drift detector (SSDD) devices to the scintillator material, wherein each SSDD device includes one output anode per segment; detecting radiation events within the scintillator material; detecting radiation events within the SSDD devices; accumulating the output signal from each of the output anodes; correlating the accumulated output signals with respect to the time that each output signal was obtained; and determining if the radiation detection event was detected by either one or more than one SSDD device.

17 The method of statement 16, wherein each SSDD device comprises a plurality of output anodes and one collective steering cathode for all anodes.

The invention may be embodied in other specific forms without departing from the spirit or essential characteristics thereof. The present embodiments are therefore to be considered in all respects as illustrative and not restrictive. Accordingly, the scope of the invention is established by the appended claims rather than by the foregoing description. While various alterations and permutations of the invention are possible, the invention is to be limited only by the following claims and equivalents.

## Claims

1. A radiation detection apparatus, the apparatus comprising:
a radiation sensor device for detecting radiation events, the sensor device comprising:
a scintillator device responsive to the radiation events; and
one or more segmented silicon drift detector (SSDD) devices optically coupled to the scintillator device, wherein each SSDD device includes an output anode for each segment; and
sensor processing circuitry coupled with each of the one or more silicon drift detector device output anodes, wherein each output can be processed simultaneously by the sensor processing circuitry.

2. The radiation detection apparatus of Claim 1, the apparatus further comprising:
a spectroscopic analysis device coupled with the sensor processing circuitry for computing spectral data associated with the radiation detection event.

3. The radiation detection apparatus of Claim 1 or Claim 2 wherein each SSDD device comprises a plurality of output anodes and one collective steering cathode for all anodes.

4. The radiation detection apparatus of any preceding Claim wherein the sensor processing circuitry comprises an embedded computer processing device capable of executing stored program instructions that allow identification of the radionuclide that triggered the radiation detection event.

5. The radiation detection apparatus of any preceding Claim wherein the sensor processing circuitry comprises:
an ASIC device coupled to the SSDD output anodes, and wherein the ASIC device can process each of the detector outputs simultaneously, and/or wherein the sensor processing circuitry comprises:
a multichannel analyzer device.

6. The radiation detection apparatus of any preceding Claim further comprising:
a networking device through which the apparatus may communicate with other like apparatuses.

7. The radiation detection apparatus of any of Claims 1 to 5 further comprising:
a networking device through which the apparatus may communicate with a supervisory control unit to form a part of a distributed network of like apparatuses.

8. The radiation detection apparatus of Claim 2, wherein the spectroscopic analysis device is capable of executing program instructions, the program steps comprising:
accumulating the output signal from each of the SSDD devices;
generating a spectral histogram based upon the accumulated output signals;
analyzing the spectral histogram with respect to interpreted known radionuclide responses; and
identifying a detected radionuclide based upon a statistical analysis of the likelihood of a match between the spectral histogram and the interpreted radionuclide response.

9. The radiation detection apparatus of Claim 8 wherein the interpreted known radionuclide responses are based on the apparatus performance characteristics.

10. The radiation detection apparatus of Claim 2, wherein the spectroscopic analysis device is capable of executing program instructions, the program steps comprising:
accumulating the output signal from each of the SSDD devices;
correlating the accumulated output signals with respect to the time that each output signal was obtained; and
determining if the radiation detection event was detected by either all or less than all SSDD devices.

11. The radiation detection apparatus of Claim 2, wherein the SSDD devices are responsive to the radiation events.

12. The radiation detection apparatus of Claim 11, wherein the spectroscopic analysis device is capable of executing program instructions, the program steps comprising:
accumulating the output signal from each of the SSDD devices;
correlating the accumulated output signals with respect to the time that each output signal was obtained; and
determining if the radiation detection event was detected by either one or more than one SSDD device.

13. A method for reducing the influence of low energy background radiation during radiation detection events in a scintillator-equipped radiation detection apparatus, the method steps comprising:
optically coupling a plurality of segmented silicon drift detector (SSDD) devices to the scintillator material, wherein each SSDD device includes at least one output anode per segment;
detecting radiation events within the scintillator material;
accumulating the output signal from each of the output anodes;
correlating the accumulated output signals with respect to the time that each output signal was obtained; and
determining if the radiation detection event was detected by either all or less than all SSDD devices.

14. A method for extending the low energy range of a scintillator-equipped radiation detection apparatus, the method steps comprising:
optically coupling a plurality of segmented silicon drift detector (SSDD) devices to the scintillator material, wherein each SSDD device includes one output anode per segment;
detecting radiation events within the scintillator material;
detecting radiation events within the SSDD devices;
accumulating the output signal from each of the output anodes;
correlating the accumulated output signals with respect to the time that each output signal was obtained; and
determining if the radiation detection event was detected by either one or more than one SSDD device.

15. The method of Claim 13 or Claim 14, wherein each SSDD device comprises a plurality of output anodes and one collective steering cathode for all anodes.
